# EUROPEAN PATENT SPECIFICATION

(11) **EP 1 375 334 B1**
(45) Date of publication and mention of the grant of the patent: **05.07.2006**
(21) Application number: 03010510.0
(22) Date of filing: 09.05.2003
(51) Int. Cl.: B62M 9/12, C23C 18/50, C25D 11/04

(54) **A plated component with a hybrid surface and method for manufacturing same**
Hybrides Verfahren zur Beschichtung von Metalloberflächen und entsprechender Gegenstand
Procede hybride de depot sur un article metallique

(30) Priority: 09.05.2002 JP 2002134413
(43) Date of publication of application: 02.01.2004
(73) Proprietor: SHIMANO INC., Sakai-shi, Osaka (JP)
(72) Inventor: Nishimura, Yasushi, Izumi-shi, Osaka (JP)
(74) Representative: Grosse, Wolfgang

(56) References cited:
- GB-A- 1 241 574
- US-A- 5 927 739
- US-B1- 6 276 235

## Description

### BACKGROUND OF THE INVENTION

The present invention is directed to a plated component and, more particularly, to a plated component having a hybrid surface.

Bicycle and fishing reel components that are used outdoors are often made from aluminum alloy in order for the components to be lightweight and have a high-quality appearance. While aluminum alloy is light, it is relatively soft and subject to wear. Accordingly, where it is used as the material for a bicycle gear plate, for example, the entire gear plate is usually covered with a relatively hard metal coating such as a nickel or nickel-chrome coating, thereby minimizing wear caused by contact between the gear plate and the chain.

Where a metal coating is formed over the entirety of such an aluminum component, even if the component itself is made from aluminum alloy for the purpose of achieving light weight, a substantial part of the benefit of the material's light weight may be lost. In particular, the metal coating must be made thick enough to prevent wear, thereby making the goal of light weight more difficult to achieve. Furthermore, where a metal coating is formed over the entire component such that the metal coating cannot be colored, then the entire component ends up as a single color, such as black or the color of the plating metal. This makes it difficult to vary the appearance of the component and assert its uniqueness or individuality.

### SUMMARY OF THE INVENTION

The present invention is directed to various features of a plated component. In one embodiment, a plated component comprises a component main unit made of a first metal consisting essentially of an aluminum alloy; an oxide coating formed over only a part of a surface of the component main unit; and a metal coating formed of a second metal, wherein the metal coating is formed over at least a part of a remainder of the surface of the component main unit. If desired, the plated component may be made by forming an oxide coating over only a part of a surface of a component main unit made of a first metal, and forming a metal coating with a second metal over at least a part of a remainder of the surface of the component main unit. Such steps need not be performed in any particular order.

Additional inventive features will become apparent from the description below, and such features alone or in combination with the above features may form the basis of further preferred embodiments of the invention as recited in the claims.

### BRIEF DESCRIPTION OF THE DRAWINGS

Fig. 1 is a side view of a particular embodiment of a bicycle that includes a particular embodiment of a plated component;
Fig. 2 is a front view of a particular embodiment of a right gear crank of the bicycle shown in Fig. 1;
Fig. 3 is a front view of a particular embodiment of a gear plate assembly;
Fig. 4 is a cross-sectional view of a portion of a gear plate having a plated component;
Figs. 5(A) - 5(F) are cross-sectional views illustrating a particular embodiment of a manufacturing process for a plated component;
Fig. 6 is a side view of a particular embodiment of a spinning reel assembly that includes a particular embodiment of a plated component;
Fig. 7 is a cross-sectional view of a portion of the spinning reel assembly having a plated component; and
Fig. 8 is a cross-sectional view of a portion of a spool having a plated component;

### DETAILED DESCRIPTION OF THE EMBODIMENTS

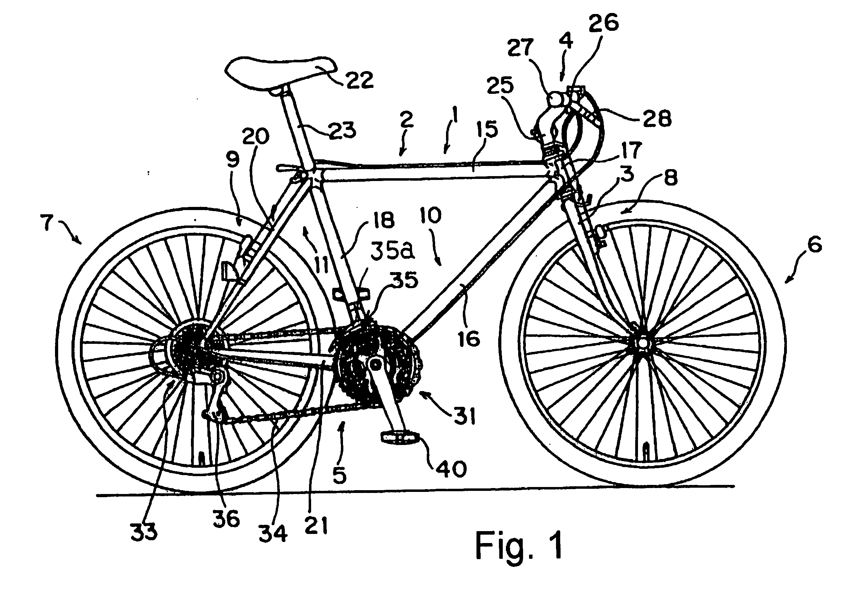

Fig. 1 is a side view of a particular embodiment of a bicycle that includes a particular embodiment of a plated component. In this embodiment, the bicycle is an MTB type of bicycle that includes a diamond-shaped frame 1 comprising a frame body 2 formed from aluminum tubes connected via Tig welding, for example, and a front fork 3 that is rotatably mounted to the front of the frame body 2. Fork 3 is mounted to frame body 2 such that it can rotate around an axis that is essentially vertical but angled somewhat relative to the bicycle body, and it is divided into two arms at the bottom part thereof. The MTB further includes a handlebar unit 4 that is linked to the front fork 3, a drive unit 5 that is mounted to the lower part of the frame body 2 and converts pedaling by the rider into drive power, a front wheel 6 that is rotatably supported by the bottom ends of the front fork 3, a rear wheel 7 that is rotatably supported by the rear part of the frame body 2, and front and rear brake devices 8 and 9.

The frame body 2 has a front triangle 10 and a rear triangle 11 that is disposed behind the front triangle 10. The front triangle 10 comprises a top tube 15 that is disposed horizontally, a down tube 16 that is disposed under the top tube 15 such that it rises toward the front, a head tube 17 that connects the front ends of the top tube 15 and the down tube 16, and a seat tube 18 that extends diagonally upward and to which the rear ends of the top tube 15 and the down tube 16 are connected. A seat post 23 to which a saddle 22 is secured is mounted to the seat tube 18 such that it can be adjusted upward and downward. A bottom bracket unit (not shown) is formed at the intersection of the seat tube 18 and the down tube 16. The rear triangle 11 comprises a pair of seatstays 20 that are connected at the front ends thereof to the seat tube 18, and a pair of chain stays 21 that extend to the back of the bicycle and are connected to the rear ends of the seatstays 20.

Handlebar unit 4 includes a handlebar stem 25 that is secured to the top of the front fork 3 such that it can be adjusted upward and downward. A handlebar 26 is secured to the top end of the handlebar stem 25 and extends in the right and left directions. A grip 27 is placed over the outer circumference of each end of the handlebar 26, and a brake lever 28 that includes a speed-changing lever is mounted to the inside of either grip 27.

The drive unit 5 has a gear crank unit 31 rotatably mounted to the bottom bracket unit, a rear gear cluster 33 non-rotatably mounted to a free hub of the rear wheel 7, and a chain 34 that engages the gear crank unit 31 and the rear gear cluster 33. The gear crank unit 31 has a right gear crank 41 and a left gear crank (not shown), and a pedal 40 is mounted to the distal end of each gear crank. A crankshaft (not shown) extends through the bottom bracket unit and links the right gear crank 41 and the left gear crank. A front derailleur 35 moves the chain 34 among the gears that form a part of gear crank unit 31, and a rear derailleur 36 moves the chain 34 among the plurality gears that form the rear gear cluster 33. The front derailleur 35 has a chain guide 35a through which the chain 34 passes.

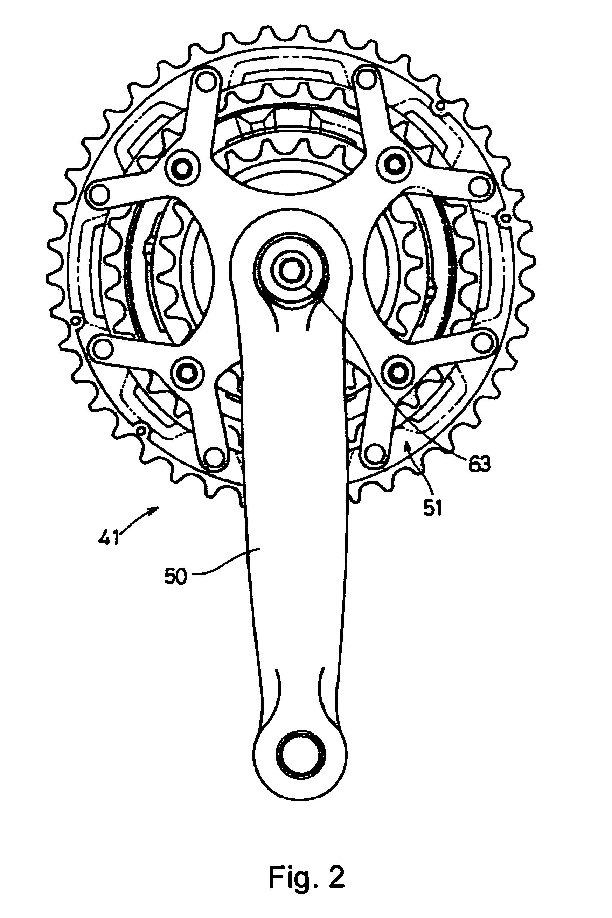

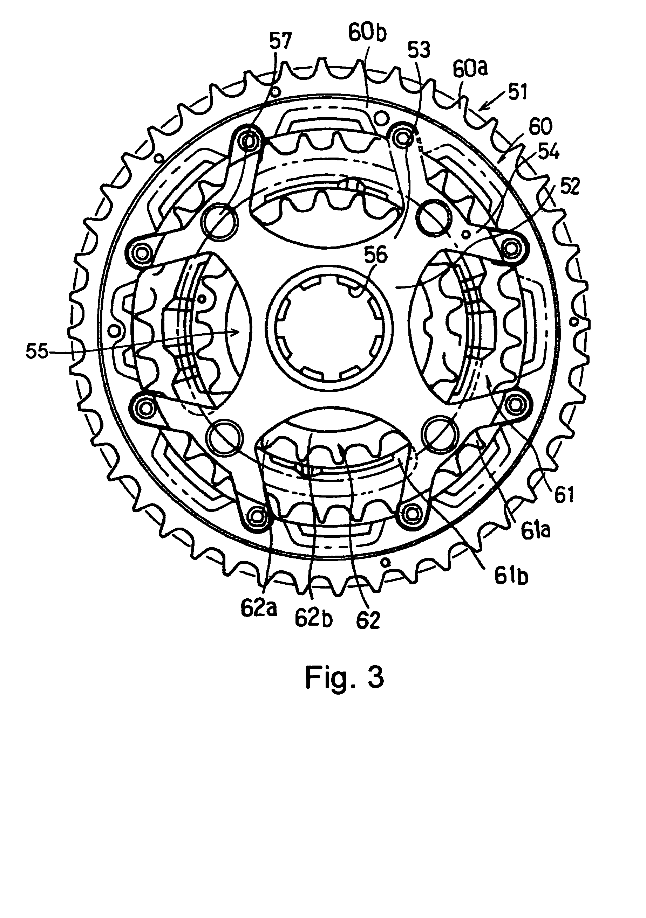

As shown in Figs. 2 and 3, the right gear crank 41 has a bar-shaped crank 50, wherein a pedal 40 is mounted to one end of crank 50 (Fig. 1), and a gear plate 51 is non-rotatably mounted to the other end of crank 50. The gear plate 51 has a crank mounting member 52 with internal splines 56 so that crank mounting member 52 can nonrotatably engage corresponding outer splines (not shown) on crank 50. Furthermore, the crank 50 and the gear plate 51 are secured to the crankshaft in a known manner through a mounting bolt 63.

A crank arm member 55 has four arms 53 that extend radially outwardly in four directions from the crank mounting member 52. Each arm 53 has an associated pair of gear securing areas 54, each of which extend outwardly in two opposite directions at the tip of each arm 53. Mounting screw holes 57 are formed in the crank arm member 55 such that there is one such hole in each arm 53. A ring-shaped outer gear 60 is riveted to the gear securing areas 54 in eight locations, and a center gear 61 having fewer teeth than the outer gear 60 is mounted to the mounting screw holes 57 coaxially with the outer gear 60. Additionally, a mounting screw hole (not shown) used for mounting an inner gear 62 is formed on the rear surface of each arm 53.

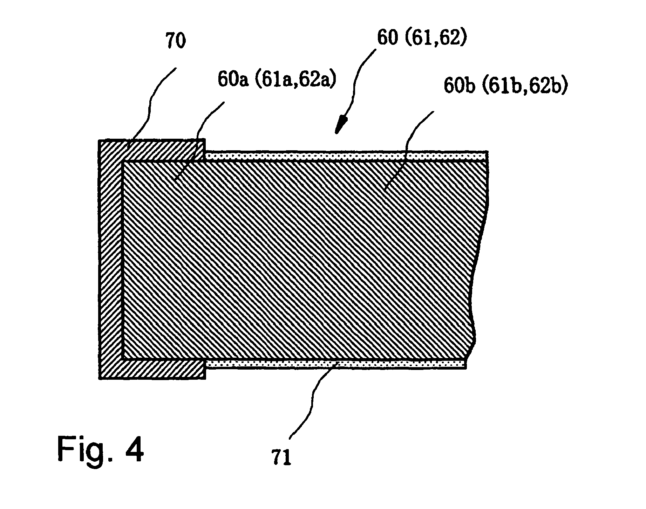

The outer gear 60, center gear 61 and inner gear 62 are made of aluminum alloy, and each has respective chain engaging teeth 60a, 61a and 62a and securing areas 60b, 61b and 62b that are mounted to the arms 53 or to the gear securing areas 54. As shown schematically in Fig. 4, a hard nickel-chrome metal coating 70, for example, is formed on the teeth 60a, 61a and 62a, while an Alumite coating 71 comprising an anodic oxide coating is formed on the securing areas 60b, 61b and 62b. In this embodiment, the thickness of the nickel-chrome metal coating 70 is from approximately 10 µm and approximately 80 µm. When the thickness of the metal coating falls within this range, which is relatively high, the tooth surface having the metal coating becomes very hard and the metal coating is not easily susceptible to wear.

The manufacturing process for the outer gear 60 will now be described. The manufacturing process for the center gear 61 and the inner gear 62 is identical thereto, so a further description thereof will be omitted.

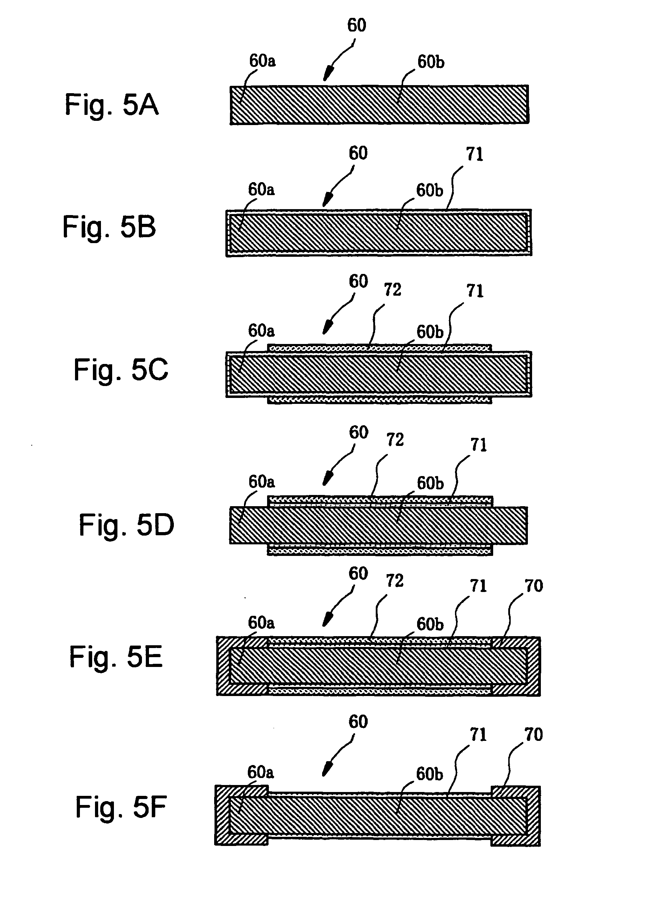

First, teeth 60a and a securing area 60b are formed via pressure-molding of an aluminum alloy material to form a component main unit as shown schematically in Fig. 5(a). Then, an Alumite coating 71 is formed on the exposed surface of the outer gear 60 as shown in Fig. 5(b) using a public-domain chemical anodizing method. During this process, if the Alumite coating 71 is colored, it can be chromatically distinguished from the metal coating 70. As shown in Fig. 5(c), a resist ink film 72 that is highly acid- and alkaline-resistant is then formed via printing, for example, on the area of the outer gear 60 that is coated with the Alumite coating 71 and on which the Alumite coating 71 is to eventually remain (the securing area 60b). After the resist ink film 72 is formed, the Alumite coating 71 is removed as shown in Fig. 5(d). NaOH or a similar compound is used for this removal. Next, a nickel-chrome metal coating 70, for example, is formed on the area of the teeth 60a as shown in Fig. 5(e) using a wet-plating method involving dipping in a plating tank. Such a wet-plating method may comprise, for example, nickel-chrome plating, nickel plating or copper-nickel-chrome plating. Because the Alumite coating 71 located where the metal coating is to be formed has been removed beforehand and plating can be applied to the conductive area, the metal coating 70 can be formed easily. Finally, the resist ink film 72 is removed as shown in Fig. 5(f) by means of a solvent, and the area is washed using water or other solution. At this time, the outer gear 60 is completed.

In this embodiment, because an Alumite coating 71 having essentially the same specific gravity as aluminum alloy is formed on part of the outer gear 60, and a metal coating 70 having a higher specific gravity than the aluminum alloy is formed not on the entire outer gear 60 but on at least part of the remainder, the increase in weight attributable to the metal coating 70 can be limited. Furthermore, because the Alumite coating 71 can be colored easily via staining or the like, the Alumite coating 71 can be used to express various colors, and the appearance of the component can be changed easily. In addition, because such a metal coating 70 is hard and wear-resistant, it does not easily become damaged or worn even after coming into contact with the chain 34.

In the previous embodiment, a plated component was described using a bicycle as an example, but the described process also may be used for other components, such as the spool of a fishing reel.

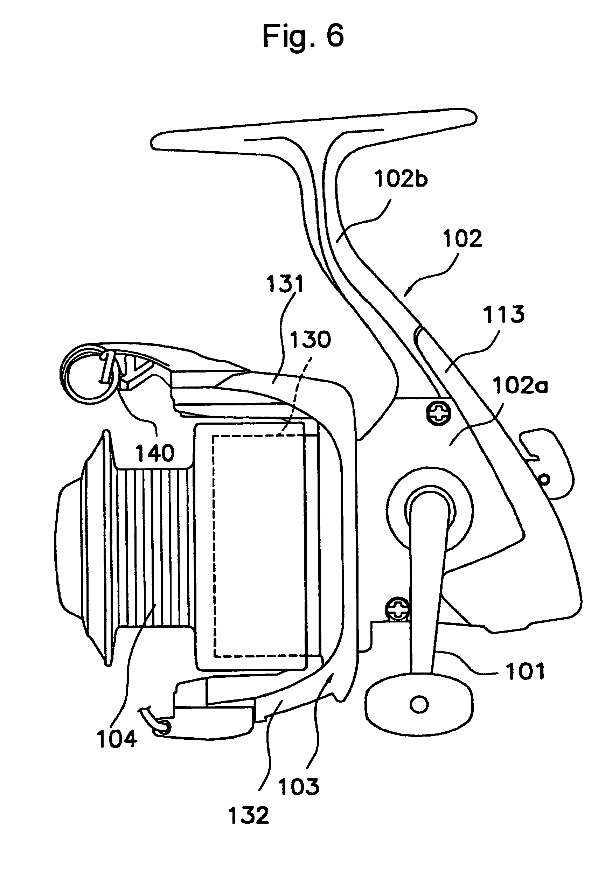

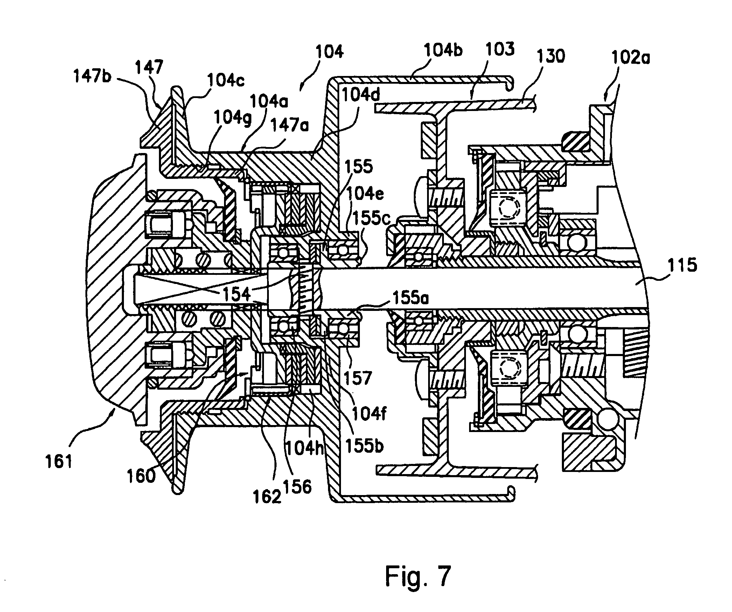

Fig. 6 is a side view of a particular embodiment of a spinning reel assembly that includes a particular embodiment of a plated component; and Fig. 7 is a cross-sectional view of a portion of the spinning reel assembly. The spinning reel assembly includes a handle assembly 101, a reel main unit 102 to which the handle assembly 101 is mounted such that handle assembly 101 can rotate around an axis that extends from the right to left of the reel (upwardly from the page in Fig. 6), a rotor 103, and a spool 104. The rotor 103 rotates in tandem with the rotation of the handle assembly 101 and guides the fishing line to the spool 104. Rotor 103 is rotatably supported at the front of the reel main unit 102 such that it can rotate around an axis that extends from the front to the back of the reel (to the left and right in Fig. 6). The spool 104 winds the fishing line guided by the rotor 103 around its outer circumference, and it is disposed at the front of the rotor 103 such that it can move back and forth, i.e., forward and backward, along its axis.

The reel main unit 102 has a hollow reel body 102a made of synthetic resin, for example, and a T-shaped rod mounting leg 102b that extends from the reel body 102a diagonally upward and toward the front as a single unit. Disposed inside the reel body 102a are a rotor drive mechanism (not shown) and an oscillating mechanism (not shown). The rotor drive mechanism causes the rotor 103 to rotate in tandem with the rotation of the handle assembly 101, and the oscillating mechanism moves the spool 104 forward and backward to ensure that the fishing line is taken up evenly on the spool. A protective cover 113 made of metal or synthetic resin, for example, covers the rear of the reel main unit 102. The protective cover 113 is disposed such that it extends from the bottom of reel main body 102, along the back of the reel body 102a to the rod mounting leg 102b, thereby covering the bottom and the back of the reel main unit 102. The protective cover 113 is removably secured to the reel main unit 102 using screws.

The rotor 103 has a cylindrical member 130 that is rotatably mounted to the reel main unit 102, first and second rotor arms 131 and 132 that extend forwardly from the outer circumferential surface of the back part of the cylindrical member 130 in a manner that forms a gap between rotor arms 131 and 132 and the cylindrical member 130, and a bail arm 140 that is movably mounted to both rotor arms and operates to guide the fishing line.

The spool 104 has a grooves construction, as shown in Fig. 6, and it is disposed between the first rotor arm 131 and the second rotor arm 132. The spool 104 is linked to the distal end of the spool shaft 115 via a drag mechanism 160 that creates a drag force on the spool 104. The drag mechanism 160 has a knob 161 and a friction unit 162. Knob 161 is used to manually adjust the drag force, and friction unit 162 comprises multiple disks that are pressed onto the spool 104 by the knob 161.

The spool 104 has a line winding barrel 104a, a skirt 104b that is integrally formed with the back part of the line winding barrel 104a, and a front flange 104c that is disposed at the front end of the line winding barrel 104a. Line winding barrel 104a is made of aluminum alloy, for example, and it is used for winding a fishing line. The skirt 104b is a bottomed cylindrical member that first extends radially from the back end of the line winding barrel 104a and then extends straight backward such that it covers the cylindrical member 130 of the rear rotor 103.

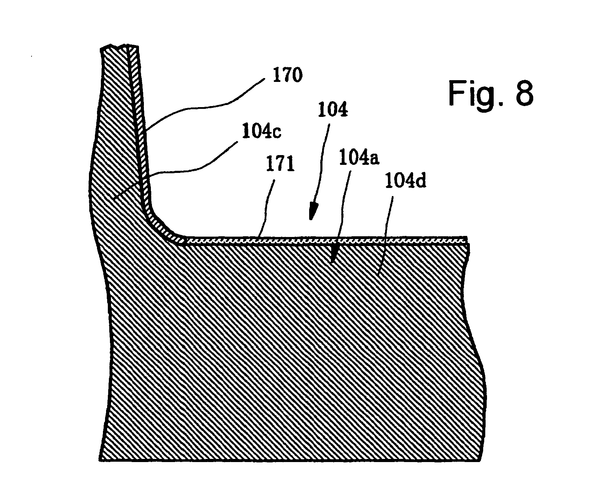

The line winding barrel 104a has an outer cylindrical member 104d disposed on the outer circumference thereof on which the fishing line is wound, a centrally-disposed cylindrical boss 104e, and a back wall 104f that links the outer cylindrical member 104d and the boss 104e. The outer cylindrical member 104d comprises a cylindrical wall running parallel to the spool shaft 115, and an Alumite coating 171 (Fig. 8) is formed on the surface thereof. The line winding barrel 104a is rotatably mounted to the spool shaft 115 by two bearings 156 and 157 that are mounted on the inner circumferential surface of the boss 104e such that they are disposed in front of and behind each other.

The bearings 156 and 157 are mounted to the spool shaft 115 via a bearing support 155. The bearing support 155 is a member that is mounted to the spool shaft 115 such that it cannot move along the length of the spool shaft 115 or rotate around it. The bearing support 155 has a cylindrical member 155a mounted to the spool shaft 115 and a guard 155b that is formed in the center of the cylindrical member 155a along the lengthwise direction. The guard 155b is disposed such that it is in contact with the front surface of the inner ring of the bearing 157. The cylindrical member 155a is mounted to the spool shaft 115 by screwed-in spool pins 154 such that it cannot move along the length of the spool shaft 115 or rotate around it. A caulking securing member 155c that regulates the backward movement of the rear bearing 157 along the length of the cylindrical member 155a is formed at the back end of the cylindrical member 155a.

The front flange 104c is integrally formed with the line winding barrel 104a. The front flange 104c extends radially from the front end of the outer cylindrical member 104d of the line winding barrel 104a, and it prevents the fishing line from leaving the spool 104 in the forward direction. A shown in Fig. 8, a hard metal coating 170 is formed on the back surface of the front flange 104c. The hard metal coating 170 is formed using the same process as that described in connection with the first embodiment. When this hard metal coating 170 is formed on the front flange 104c, the front flange 104c does not easily become damaged or worn by contact with the fishing line. Furthermore, when an Alumite coating 171 is formed on the outer cylindrical member 104d of the line winding barrel 104a and on the skirt 104b adjacent thereto, the spool can be kept lightweight and various types of designs can be expressed via coloring.

A spool collar 147 is disposed in front of the front flange 104c. The spool collar 147 has a cylindrical mounting member 147a and a guard 147b that extends radially outwardly from the distal end of cylindrical mounting member 147a. Cylindrical mounting member 147 is screwed into a female screw hole 104g formed in the distal end inner circumferential surface of the outer cylindrical member 104d of the line winding barrel 104a.

Because an Alumite coating 171 having essentially the same specific gravity as aluminum alloy is formed on the outer circumferential surfaces of the line winding barrel 104a and the skirt 104b, and a metal coating 170 having a higher specific gravity than the aluminum alloy is formed on the back surface of the front flange 104c only, rather than on the entire spool surface, the increase in spool weight due to the formation of the metal coating can be minimized and the spool kept lightweight despite the presence of such a metal coating. Furthermore, because the Alumite coating 101 can be colored easily by staining or by some other method, various colors can be easily expressed via the Alumite coating 171. As a result, the lightweight look of aluminum can be accentuated, and the appearance of the spool can be changed easily.

While the above is a description of various embodiments of inventive features, further modifications may be employed without departing from the spirit and scope of the present invention. For example, different metals and oxide coatings as well as synthetic resins may be used in place of the coatings specifically described. In the above embodiments, the hard metal coating was formed mainly on areas that came into contact with other materials or components, but it is acceptable if the metal coating is used in order to form characters or markings to indicate the model number, manufacturer or the like. For example, a metal coating may be formed on the bicycle crank or on the reel main unit or skirt of a fishing reel to display characters or markings thereon. In that case, the characters or markings appear raised from the surface of the base surface, thus creating a high-quality appearance.

In the above embodiments, a bicycle gear plate and the spool of a spinning reel were described as examples of the plated component, but the described structure and process is not limited to these examples, and they may be applied to other components of a bicycle or fishing reel, or even some other structure that could benefit from such plated structures. For example, a metal coating may be formed on the inner side surface of the chain guide 35a of the front derailleur 35 that comes into contact with the chain 34, and an anodic oxide coating may be formed on the outer side surface of the chain guide 35a that is exposed to the outside.

## Claims

1. A plated component comprising:
a component main unit made of a first metal consisting essentially of an aluminum alloy;
an oxide coating (71, 171) formed over only a part of a surface of the component main unit; and
a metal coating (70, 170) made of a second metal, wherein the metal coating is formed over at least a part of a remainder of the surface of the component main unit.

2. The plated component according to claim 1 wherein the oxide coating (71, 171) consists essentially of an anodic oxide coating.

3. The plated component according to claim 2 wherein at least a portion of the anodic oxide coating (71, 171) comprises a colored coating.

4. The plated component according to claim 2 or 3 wherein at least a portion of the anodic oxide coating (71, 171) is chromatically distinguished from the metal coating (70, 170).

5. The plated component according to any of the preceding claims wherein the oxide coating (71, 171) has a specific gravity substantially equal to a specific gravity of the first metal.

6. The plated component according to any of the preceding claims wherein the second metal has a specific gravity higher than a specific gravity of the first metal.

7. The plated component according to any of the preceding claims wherein a thickness of the metal coating (70, 170) is in a range from approximately 10µm to approximately 80µm.

8. The plated component according to any of the preceding claims wherein the metal coating (70, 170) is formed by a wet-plating method comprising nickel-chrome plating.

9. The plated component according to any of the preceding claims 1 to 7 wherein the metal coating (70, 170) is formed by a wet-plating method comprising nickel plating.

10. The plated component according to any of the preceding claims 1 to 7 wherein the metal coating (70, 170) is formed by a wet-plating method comprising copper-nickel-chrome plating.

11. The plated component according to any of the preceding claims wherein the metal coating (70, 170) is formed over a part of the component main unit that is exposed to a material that tends to wear the component main unit.

12. The plated component according to any of the preceding claims wherein the component main unit comprises a bicycle component that is exposed to an outside environment.

13. The plated component according to claim 12 wherein the component main unit comprises a gear plate that is used for gear shifting, wherein the gear plate comprises:
teeth that engage with a chain of the bicycle; and
a securing area that is disposed on an inner circumferential side of the teeth;
wherein the metal coating (70) is formed over the teeth; and
wherein the anodic oxide coating (71) is formed over the securing area.

14. The plated component according to claim 12 or 13, wherein the component main unit comprises a front derailleur chain guide through which a chain used for gear shifting of the bicycle passes, wherein the metal coating (70) is formed over an inner side surface of the chain guide that comes into contact with the chain, and wherein the anodic oxide coating (71) is formed over an outer side surface of the chain guide.

15. The plated component according to any of the preceding claims 1 to 11 wherein the component main unit comprises a main unit of a fishing reel component that is exposed to an outside environment.

16. The plated component according to claim 15 wherein the component main unit comprises a spool of a spinning reel that has a front flange and a line winding barrel having a smaller diameter than the front flange, wherein the metal coating (170) is formed over the front flange, and wherein the anodic oxide coating (171) is formed over the line winding barrel.

17. A method of manufacturing a plated component according to any of the preceding claims comprising the steps of, in no particular order:
forming an oxide coating (71, 171) over only a part of a surface of a component main unit made of a first metal; and
forming a metal coating (70, 170) with a second metal over at least a part of a remainder of the surface of the component main unit.

18. The method according to claim 17 wherein the step of forming the oxide coating (71, 171) is performed prior to the step of forming the metal coating (70, 170).

19. The method according to claim 17 or 18 wherein the step of forming the oxide coating (70, 170) comprises the steps of:
forming the oxide coating (71, 171) completely over the surface of the component main unit; and
removing the oxide coating (71, 171) from the surface of the component main unit over which the metal layer (70, 170) is to be formed.

20. The method according to any of claims 17 to 18 wherein the step of forming the oxide coating (71, 171) comprises the step of forming an anodic oxide coating (71, 171) over only the part of the surface of the component main unit.

21. The method according to claim 19 wherein the step of removing the oxide coating (71, 171) comprises the steps of:
forming a resist film over the component main unit where the oxide coating (71, 171) is to remain and not over a part of the component main unit over which the metal coating (70, 170) is to be formed; and
removing the anodic oxide coating (71, 171) from the component main unit over which the resist film was not formed.

22. The method according to claim 21 further comprising the step of removing the resist film from a portion of the component main unit not covered by the metal coating (70, 170) for exposing the oxide coating (71, 171).

## Patentansprüche

1. Plattierte Komponente, aufweisend:
eine Komponentenhaupteinheit aus einem ersten Metall, das im Wesentlichen aus einer Aluminiumlegierung besteht,
eine Oxidbeschichtung (71, 171), die nur über einem Teil einer Oberfläche der Komponentenhaupteinheit ausgebildet ist, und
eine Metallbeschichtung (70, 170) aus einem zweiten Metall, wobei die Metallbeschichtung wenigstens über einem Teil eines Restes der Oberfläche der Komponentenhaupteinheit ausgebildet ist.

2. Plattierte Komponente nach Anspruch 1, wobei die Oxidbeschichtung (71, 171) im Wesentlichen aus einer anodischen Oxidbeschichtung besteht.

3. Plattierte Komponente nach Anspruch 2, wobei wenigstens ein Abschnitt der anodischen Oxidbeschichtung (71, 171) eine farbige Beschichtung aufweist.

4. Plattierte Komponente nach Anspruch 2 oder 3, wobei sich wenigstens ein Abschnitt der anodischen Oxidbeschichtung (71, 171) farblich von der Metallbeschichtung (70, 170) unterscheidet.

5. Plattierte Komponente nach einem der vorhergehenden Ansprüche, wobei die Oxidbeschichtung (71, 171) ein spezifisches Gewicht besitzt, das im Wesentlichen gleich einem spezifischen Gewicht des ersten Metalls ist.

6. Plattierte Komponente nach einem der vorhergehenden Ansprüche, wobei das zweite Metall ein spezifisches Gewicht besitzt, das höher als ein spezifisches Gewicht des ersten Metalls ist.

7. Plattierte Komponente nach einem der vorhergehenden Ansprüche, wobei eine Dicke der Metallbeschichtung (70, 170) in einem Bereich von etwa 10µm bis etwa 80µm liegt.

8. Plattierte Komponente nach einem der vorhergehenden Ansprüche, wobei die Metallbeschichtung (70, 170) durch ein Nickel-Chrom-Plattieren umfassendes Nassplattierverfahren ausgebildet ist.

9. Plattierte Komponente nach einem der vorhergehenden Ansprüche 1 bis 7, wobei die Metallbeschichtung (70, 170) durch ein Nickelplattieren aufweisendes Nassplattierverfahren ausgebildet ist.

10. Plattierte Komponente nach einem der vorhergehenden Ansprüche 1 bis 7, wobei die Metallbeschichtung (70, 170) durch ein Kupfer-Nickel-Chrom-Plattieren aufweisendes Nassplattierverfahren ausgebildet ist.

11. Plattierte Komponente nach einem der vorhergehenden Ansprüche, wobei die Metallbeschichtung (70, 170) über einem Teil der Komponentenhaupteinheit, der einem Material ausgesetzt ist, das zum Verschleißen der Komponentenhaupteinheit tendiert, ausgebildet ist.

12. Plattierte Komponente nach einem der vorhergehenden Ansprüche, wobei die Komponentenhaupteinheit eine Fahrradkomponente aufweist, die einer Außenumgebung ausgesetzt ist.

13. Plattierte Komponente nach Anspruch 12, wobei die Komponentenhaupteinheit ein Zahnkranzblatt aufweist, das zum Gangschalten verwendet wird, wobei das Zahnkranzblatt aufweist:
Zähne, die in eine Kette des Fahrrads eingreifen, und
einen Befestigungsbereich, der auf einer inneren Umfangsseite der Zähne angeordnet ist,
wobei die Metallbeschichtung (70) über den Zähnen ausgebildet ist, und
wobei die anodische Oxidbeschichtung über dem Befestigungsbereich ausgebildet ist.

14. Plattierte Komponente nach Anspruch 12 oder 13, wobei die Komponentenhaupteinheit eine Vorderkettenwerfer-Kettenführung aufweist, durch die eine zum Gangschalten verwendete Kette des Fahrrads läuft, wobei die Metallbeschichtung (70) über einer inneren Seitenfläche der Kettenführung gebildet ist, die mit der Kette in Berührung kommt, und wobei die anodische Oxidbeschichtung (71) über einer äußeren Seitenfläche der Kettenführung ausgebildet ist.

15. Plattierte Komponente nach einem der vorhergehenden Ansprüche 1 bis 11, wobei die Komponentenhaupteinheit eine Haupteinheit einer Angelwindenkomponente, die einer Außenumgebung ausgesetzt ist, aufweist.

16. Plattierte Komponente nach Anspruch 15, wobei die Komponentenhaupteinheit eine Spule einer Angelwinde aufweist, die einen vorderen Flansch und eine Schnurwickeltrommel, die einen kleineren Durchmesser als der vordere Flansch besitzt, besitzt, wobei die Metallbeschichtung (170) über dem vorderen Flansch ausgebildet ist, und wobei die anodische Oxidbeschichtung (171) über der Schnurwickeltrommel ausgebildet ist.

17. Verfahren zur Herstellung einer plattierten Komponente nach einem der vorhergehenden Ansprüche, aufweisend die folgenden Schritte ohne besondere Reihenfolge:
Ausbilden einer Oxidbeschichtung (71, 171) nur über einem Teil einer Oberfläche einer Komponentenhaupteinheit aus einem ersten Metall, und
Ausbilden einer Metallbeschichtung (70, 170) mit einem zweiten Metall wenigstens über einem Teil eines Restes der Oberfläche der Komponentenhaupteinheit.

18. Verfahren nach Anspruch 17, wobei der Schritt des Ausbildens der Oxidbeschichtung (71, 171) vor dem Schritt des Ausbildens der Metallbeschichtung (70, 170) ausgeführt wird.

19. Verfahren nach Anspruch 17 oder 18, wobei der Schritt des Ausbildens der Oxidbeschichtung (70, 170) die folgenden Schritte umfasst:
Ausbilden der Oxidbeschichtung (71, 171) vollständig über der Oberfläche der Komponentenhaupteinheit, und
Entfernen der Oxidbeschichtung (71, 171) von der Oberfläche der Komponentenhaupteinheit, über der die Metallschicht (70, 171) auszubilden ist.

20. Verfahren nach einem der Ansprüche 17 bis 18, wobei der Schritt des Ausbildens der Oxidbeschichtung (71, 171) den Schritt des Ausbildens einer anodischen Oxidbeschichtung (71, 171) nur über dem Teil der Oberfläche der Komponentenhaupteinheit umfasst.

21. Verfahren nach Anspruch 19, wobei der Schritt des Entfernens der Oxidbeschichtung (71, 171) die folgenden Schritte umfasst:
Ausbilden einer Abdeckschicht über der Komponentenhaupteinheit, wo die Oxidbeschichtung (71, 171) bleiben soll, und nicht über einem Teil der Komponentenhaupteinheit, über der die Metallbeschichtung (70, 170) auszubilden ist, und
Entfernen der anodischen Oxidbeschichtung (71, 171) von der Komponentenhaupteinheit, über der die Abdeckschicht nicht ausgebildet wurde.

22. Verfahren nach Anspruch 21, des Weiteren umfassend den Schritt des Entfernens der Abdeckschicht von einem Abschnitt der Komponentenhaupteinheit, der nicht von der Metallbeschichtung (70, 170) bedeckt ist, um die Oxidbeschichtung (71, 171) freizulegen.

## Revendications

1. Composant métallisé comprenant
une unité principale de composant fabriqué à partir d'un premier métal consistant essentiellement en un alliage d'aluminium ;
un revêtement d'oxyde (71, 171) uniquement formé audessus d'une partie d'une surface de l'unité principale de composant ; et
un revêtement métallique (70, 170) fabriqué à partir d'un second métal, dans lequel le revêtement de métal est formé audessus d'au moins une partie du reste de la surface de l'unité principale de composant.

2. Composant métallisé selon la revendication 1, dans lequel le revêtement d'oxyde (71, 171) consiste essentiellement en un revêtement d'oxyde anodique.

3. Composant métallisé selon la revendication 2, dans lequel au moins une portion de revêtement d'oxyde -anodique (71, 171) comprend un revêtement coloré.

4. Composant métallisé selon la revendication 2 ou 3, dans lequel au moins une portion de revêtement d'oxyde anodique (71, 171) est différenciée de façon chromatique du revêtement métallique (70, 170).

5. Composant métallisé selon l'une quelconque des revendications précédentes, dans lequel le revêtement d'oxyde (71, 171) a une densité sensiblement égale à une densité du premier métal.

6. Composant métallisé selon l'une quelconque des revendications précédentes, dans lequel le second métal a une densité supérieure à une densité du premier métal.

7. Composant métallisé selon l'une quelconque des revendications précédentes, dans lequel une épaisseur de revêtement métallique (70, 170) est dans une plage d'approximativement 10 pm à approximativement 80 pm.

8. Composant métallisé selon l'une quelconque des revendications précédentes, dans lequel le revêtement métallique (70, 170) est formé grâce à un procédé de métallisation par voie humide comprenant un nickelagechromage.

9. Composant métallisé selon l'une quelconque des revendications précédentes 1 à 7, dans lequel le revêtement métallique (70, 170) est formé grâce à un procédé de métallisation par voie humide comprenant un nickelage.

10. Composant métallisé selon l'une quelconque des revendications précédentes 1 à 7 dans lequel le revêtement métallique (70, 170) est formé grâce à un procédé de métallisation par voie humide comprenant un cuivragenickelagechromage.

11. Composant métallisé selon l'une quelconque des revendications précédentes, dans lequel le revêtement métallique (70, 170) est formé au-dessus d'une partie de l'unité principale de composant qui est exposée à un matériau qui a tendance à user l'unité principale de composant.

12. Composant métallisé selon l'une quelconque des revendications précédentes, dans lequel l'unité principale de composant comprend un composant de bicyclette qui est exposé à un environnement extérieur.

13. Composant métallisé selon la revendication 12, dans lequel l'unité principale de composant comprend un plateau qui est utilisé pour changer des vitesses, dans lequel le plateau comprend
des dents qui se mettent en prise avec une chaîne de la bicyclette ; et
une zone de fixation qui est disposée sur un côté circonférentiel interne des dents ;
dans lequel le revêtement métallique (70) est formé sur les dents ; et
dans lequel le revêtement d'oxyde anodique (71) est formé sur la zone de fixation.

14. Composant métallisé selon la revendication 12 ou 13, dans lequel l'unité principale de composant comprend un guidechaîne de dérailleur avant à travers lequel passe une chaîne, utilisée pour le changement de vitesse de la bicyclette, dans lequel le revêtement métallique (70) est formé sur une surface latérale interne du guide-chaîne qui entre en contact avec la chaîne, et dans lequel le revêtement d'oxyde anodique (71) est formé sur une surface externe du guide-chaîne.

15. Composant métallisé selon l'une quelconque des revendications précédentes 1 à 11, dans lequel l'unité principale de composant comprend une unité principale d'un composant de moulinet de pêche qui est exposé à un environnement extérieur.

16. Composant métallisé selon la revendication 15, dans lequel l'unité principale de composant comprend un tambour d'un moulinet à tambour tournant qui a un rebord avant et un cylindre d'enroulement de ligne ayant un diamètre inférieur au rebord avant, dans lequel le revêtement métallique (170) est formé sur le rebord avant, et dans lequel le revêtement d'oxyde anodique (171) est formé sur le cylindre d'enroulement de ligne.

17. Procédé de fabrication d'un composant métallisé selon l'une quelconque des revendications précédentes comprenant les étapes consistant à, sans aucun ordre particulier
former un revêtement d'oxyde (71, 171) sur uniquement une partie d'une surface d'une unité principale de composant fabriqué à partir d'un premier métal ; et
former un revêtement métallique (70, 170) fabriqué à partir d'un second métal sur au moins une partie du reste de la surface de l'unité principale de composant.

18. Procédé selon la revendication 17, dans lequel l'étape consistant à former le revêtement d'oxyde (71, 171) est accomplie avant l'étape consistant à former le revêtement métallique (70, 170).

19. Procédé selon la revendication 17 ou 18, dans lequel l'étape consistant à former le revêtement métallique (70, 170) comprend les étapes consistant à former complètement le revêtement d'oxyde (71, 171) sur la surface de l'unité principale de composant ; et
retirer le revêtement d'oxyde (71, 171) de la surface de l'unité principale de composant sur laquelle la couche métallique (70, 170) va être formée.

20. Procédé selon l'une quelconque des revendications 17 à 18, dans lequel l'étape consistant à former le revêtement d'oxyde (71, 171) comprend l'étape consistant à former un revêtement d'oxyde anodique (71, 171) sur uniquement la partie de la surface de l'unité principale de composant.

21. Procédé selon la revendication 19, dans lequel l'étape consistant à retirer le revêtement d'oxyde (71, 171) comprend les étapes consistant à
former un film de protection sur l'unité principale de composant où le revêtement d'oxyde (71, 171) doit rester et non pas sur une partie de l'unité principale de composant sur laquelle le revêtement métallique (70, 170) va être formé ; et
retirer le revêtement d'oxyde anodique (71, 171) de l'unité principale de composant sur laquelle le fil de protection n'a pas été formé.

22. Procédé selon la revendication 21, comprenant en outre l'étape consistant à retirer le fil de protection d'une portion de l'unité principale de composant non recouverte par le revêtement métallique (70, 170) afin d'exposer le revêtement d'oxyde (71, 171).
